(19) **Europäisches Patentamt / European Patent Office / Office européen des brevets**

(11) **EP 4 300 632 A1**

(12) **EUROPEAN PATENT APPLICATION**
published in accordance with Art. 153(4) EPC

(43) Date of publication:
**03.01.2024 Bulletin 2024/01**

(21) Application number: **22807777.2**

(22) Date of filing: **10.05.2022**

(51) International Patent Classification (IPC):
**H01M 4/525** (2010.01)   **H01M 4/505** (2010.01)
**H01M 4/36** (2006.01)   **H01M 10/052** (2010.01)
**C01G 53/00** (2006.01)

(52) Cooperative Patent Classification (CPC):
**C01G 53/00; H01M 4/36; H01M 4/505;**
**H01M 4/525; H01M 10/052;** Y02E 60/10

(86) International application number:
**PCT/KR2022/006638**

(87) International publication number:
**WO 2022/240129 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.05.2021 KR 20210061016**

(71) Applicant: **Lg Chem, Ltd.**
**Seoul 07336 (KR)**

(72) Inventors:
• **LEE, Woo Ram**
**Daejeon 34122 (KR)**
• **KIM, Na Ri**
**Daejeon 34122 (KR)**
• **KANG, Dong Ryoung**
**Daejeon 34122 (KR)**
• **CHOI, Sang Soon**
**Daejeon 34122 (KR)**
• **PARK, Hyun Ah**
**Daejeon 34122 (KR)**
• **KIM, Woo Hyun**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL AND METHOD FOR PRODUCING SAME**

(57)    The present invention relates to a positive electrode active material capable of achieving a lithium secondary battery having excellent initial charge and discharge efficiency, life characteristics, and thermal stability and a preparation method thereof, wherein the positive electrode active material of the present invention includes a core portion including a lithium transition metal oxide in which a mole ratio of nickel (Ni) in total transition metals is 80 mol% or more, and a layer-structured shell portion which is formed on the core portion and includes a lithium transition metal oxide in which a molar ratio of manganese (Mn) in the total transition metals is 30 mol% or more, and satisfies Equation 1 described in the present specification.

[FIG. 1]

EP 4 300 632 A1

**Description**

**TECHNICAL FIELD**

**Cross-reference to Related Applications**

This application claims priority from Korean Patent Application No. 10-2021-0061016, filed on May 11, 2021, the disclosure of which is incorporated by reference herein.

**Technical Field**

The present invention relates to a positive electrode active material and a preparation method thereof, and more particularly, to a positive electrode active material capable of achieving a lithium secondary battery having excellent initial charge and discharge efficiency, life characteristics, and thermal stability and a preparation method thereof.

**BACKGROUND ART**

Demand for secondary batteries as an energy source has been significantly increased as demand with respect to mobile devices and electric vehicles have increased, and, among these secondary batteries, lithium secondary batteries having high energy density and low self-discharging rate have been commercialized and widely used. Particularly, demand for high-capacity secondary batteries is increasing as an electric vehicle market is rapidly expanding in recent years.

In order to improve capacity characteristics of the secondary battery, lithium composite transition metal oxides including two or more types of transition metals, such as NCM and NCMA, have been developed and used as a positive electrode active material. Particularly, a lithium composite transition metal oxide including a lot of nickel has been developed and used. However, the lithium composite transition metal oxide having a high nickel content has a problem in that it is inferior in terms of long-term lifetime and thermal stability.

Conventionally, during the preparation of the lithium composite transition metal oxide such as NCM and NCMA, after an aqueous transition metal solution was prepared by dissolving transition metal raw materials, such as nickel sulfate, cobalt sulfate, and manganese sulfate, in water, a co-precipitation reaction was performed while adding the transition metal aqueous solution, a cationic complexing agent, and a basic compound to a reactor at uniform rates to prepare a transition metal precursor in the form of a hydroxide with a uniform composition inside and outside a particle, and it was common to prepare the lithium composite transition metal oxide with a uniform composition inside and outside a particle by mixing the transition metal precursor and a lithium raw material and then sintering the mixture. However, it was difficult to achieve sufficient life characteristics and thermal stability of the lithium secondary battery with the conventional lithium composite transition metal oxide prepared by the above-described method.

Thus, there is a need to develop a positive electrode active material which may achieve a lithium secondary battery having excellent life characteristics and thermal stability as well as excellent initial charge and discharge efficiency.

**DISCLOSURE OF THE INVENTION**

**TECHNICAL PROBLEM**

An aspect of the present invention provides a positive electrode active material, which may achieve a lithium secondary battery having excellent initial charge and discharge efficiency, life characteristics, and thermal stability, and a method of preparing the positive electrode active material.

**TECHNICAL SOLUTION**

In order to solve the above-described tasks, the present invention provides a positive electrode active material as follows, a preparation method thereof, a positive electrode including the positive electrode active material, and a lithium secondary battery including the positive electrode.

(1) The present invention provides a positive electrode active material including: a core portion including a lithium transition metal oxide in which a mole ratio of nickel (Ni) in total transition metals is 80 mol% or more; and a layer-structured shell portion which is formed on the core portion and includes a lithium transition metal oxide in which a molar ratio of manganese (Mn) in the total transition metals is 30 mol% or more, wherein the positive electrode active material satisfies Equation 1.

[Equation 1]

$$0.005 \leq \frac{\text{Thickness of the shell portion (μm)}}{\text{Average particle diameter}(D_{50}) \text{ of the positive electrode active material (μm)}} \leq 0.15$$

(2) The present invention provides the positive electrode active material of (1) above, wherein the thickness of the shell portion is in a range of 100 nm to 600 nm.

(3) The present invention provides the positive electrode active material of (1) or (2) above, wherein the average particle diameter ($D_{50}$) of the positive electrode active material is in a range of 1 um to 100 μm.

(4) The present invention provides the positive electrode active material of any one of (1) to (3) above, wherein the lithium transition metal oxide, in which the molar ratio of the Ni in the total transition metals is 80 mol% or more, has a composition represented by Formula 1.

[Formula 1]    $Li_{x1}[Ni_aCo_bM1_c]O_2$

In Formula 1,

M1 is at least one selected from manganese (Mn), aluminum (Al), boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W), and
$0.9 \leq x1 \leq 1.1$, $0.8 \leq a \leq 1$, $0 \leq b \leq 0.2$, $0 \leq c \leq 0.2$, and $a+b+c=1$.

(5) The present invention provides the positive electrode active material of any one of (1) to (4) above, wherein the lithium transition metal oxide, in which the molar ratio of the Mn in the total transition metals is 30 mol% or more, has a composition represented by Formula 2.

[Formula 2]    $Li_{x2}[Mn_dM2_e]O_2$

In Formula 2,

M2 is at least one selected from Ni, cobalt (Co), Al, B, Mg, Ca, Ti, V, Cr, Fe, Zn, Ga, Y, Zr, Nb, Mo, Ta, and W, and
$0.9 \leq x2 \leq 1.1$, $0.3 \leq d \leq 1$, $0 \leq e \leq 0.7$, and $d+e=1$.

(6) The present invention provides a method of preparing the positive electrode active material of any one of (1) to (5) above which includes: preparing a multilayer-structured precursor for a positive electrode active material in which two or more elements among nickel, cobalt, and manganese are precipitated in different regions; and mixing the precursor for a positive electrode active material with a lithium raw material and sintering the mixture.

(7) The present invention provides the method of (6) above, wherein the preparing of the precursor for a positive electrode active material includes: performing a co-precipitation reaction while adding a metal solution containing nickel and cobalt, an ammonium cationic complexing agent, and a basic compound to form nickel-cobalt hydroxide particles; and performing a co-precipitation reaction while adding a metal solution containing nickel, cobalt, and manganese, an ammonium cationic complexing agent, and a basic compound to a reaction solution containing the nickel-cobalt hydroxide particles to form a nickel-cobalt-manganese hydroxide on the nickel-cobalt hydroxide particles.

(8) The present invention provides the method of (6) above, wherein the preparing of the precursor for a positive electrode active material includes: performing a precipitation reaction while adding a metal solution containing nickel, an ammonium cationic complexing agent, and a basic compound to form nickel hydroxide particles; performing a precipitation reaction while adding a metal solution containing manganese, an ammonium cationic complexing agent, and a basic compound to a reaction solution containing the nickel hydroxide particles to form nickel/manganese hydroxide particles in which a manganese hydroxide is precipitated on the nickel hydroxide particles; and performing a precipitation reaction while adding a metal solution containing cobalt, an ammonium cationic complexing agent, and a basic compound to a reaction solution containing the nickel/manganese hydroxide to form nickel/manganese/cobalt hydroxide particles in which a cobalt hydroxide is precipitated on the nickel/manganese hydroxide particles.

(9) The present invention provides a positive electrode including the positive electrode active material of any one of (1) to (5).

(10) The present invention provides a lithium secondary battery including the positive electrode of (9).

## ADVANTAGEOUS EFFECTS

A positive electrode active material of the present invention may improve initial charge and discharge efficiency, long-term life characteristics, and thermal stability of a lithium secondary battery using the positive electrode active material by including a shell portion having a high manganese content and adjusting a thickness of the shell portion with respect to an average particle diameter ($D_{50}$) of the positive electrode active material to an appropriate level.

## BRIEF DESCRIPTION OF THE DRAWINGS

FIG. 1 is transmission electron microscope-energy dispersive X-ray spectroscopy (TEM-EDS) mapping images of a cross section of a positive electrode active material prepared in Example 1.

FIG. 2 is TEM-EDS mapping images of a cross section of a positive electrode active material prepared in Comparative Example 1.

## MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present specification, the expression "average particle diameter ($D_{50}$)" may be defined as a particle diameter at a cumulative volume of 50% in a particle size distribution curve. The average particle diameter ($D_{50}$), for example, may be measured by using a laser diffraction method. The laser diffraction method may generally measure a particle diameter ranging from a few nm to a few mm and may obtain highly repeatable and high-resolution results.

As a result of a significant amount of research conducted into developing a positive electrode active material capable of improving long-term life characteristics and thermal stability of a lithium secondary battery, the present inventors have found that, in a case in which a thickness of a shell portion with respect to an average particle diameter ($D_{50}$) of a positive electrode active material including the shell portion having a higher manganese content than a core portion is adjusted to an appropriate level, initial charge and discharge efficiency, long-term life characteristics, and thermal stability of a lithium secondary battery using the above positive electrode active material are excellent, thereby leading to the completion of the present invention.

### Positive Electrode Active Material

First, a positive electrode active material according to the present invention will be described.

The positive electrode active material according to the present invention includes a core portion including a lithium transition metal oxide in which a mole ratio of nickel (Ni) in total transition metals is 80 mol% or more; and a layer-structured shell portion which is formed on the core portion and includes a lithium transition metal oxide in which a molar ratio of manganese (Mn) in the total transition metals is 30 mol% or more, and satisfies Equation 1 below.

[Equation 1]

$$0.005 \leq \frac{\text{Thickness of the shell portion (μm)}}{\text{Average particle diameter}(D_{50}) \text{ of the positive electrode active material (μm)}} \leq 0.15$$

In the present invention, the core portion and the shell portion may be divided based on the molar ratio of the Mn included in the lithium transition metal oxide. In the lithium transition metal oxide constituting the core portion, since the molar ratio of the Ni in the total transition metals is 80 mol% or more, the molar ratio of the Mn in the total transition metals is 20 mol% or less. Thus, in the positive electrode active material, a portion, in which the lithium transition metal oxide having a molar ratio of Mn in the total transition metals of 20 mol% or less is present, may be divided into the core portion, and a portion, in which the lithium transition metal oxide having a molar ratio of Mn in the total transition metals of 30 mol% or more is present, may be divided into the shell portion. The molar ratio of the Mn in the total transition metals may be confirmed through energy dispersive X-ray spectroscopy (EDS) mapping or EDS line-scan of a cross section of the positive electrode active material.

The positive electrode active material according to the present invention is a positive electrode active material having different compositions between the core portion and the shell portion, wherein, since an amount of the Mn, which makes lifetime stability and thermal stability excellent among constituent elements of the lithium transition metal oxide, is concentrated on surfaces of particles sensitive to a reaction with an electrolyte to act as a protective layer, a lithium secondary battery using the above positive electrode active material has excellent long-term life characteristics and thermal stability.

In a case in which the molar ratio of the Ni of the lithium transition metal oxide included in the core portion is less than 80 mol%, since an amount of the Ni in the positive electrode active material as a whole is low if the molar ratio of the Ni in the shell portion is also low, a high-capacity lithium secondary battery may not be prepared, and, if the molar ratio of the Ni in the shell portion is high, there is a problem in that the Mn, which makes the lifetime stability and thermal stability excellent, may not be concentrated on the surface of the positive electrode active material as the present invention aims.

In a case in which the molar ratio of the Mn of the lithium transition metal oxide included in the shell portion is less than 30 mol%, the Mn may not be concentrated on the surface of the positive electrode active material due to an excessively low Mn content.

The present invention may achieve a shell portion having a completely continuous layered structure by adjusting a thickness of the shell portion having a high manganese content so that the thickness of the shell portion with respect to an average particle diameter ($D_{50}$) of the positive electrode active material is in a range of 0.005 to 0.15. A value according to Equation 1 may be in a range of 0.005 to 0.15, specifically, 0.006 to 0.14. In a case in which the thickness of the shell portion with respect to the average particle diameter ($D_{50}$) of the positive electrode active material is less than 0.005, since the thickness of the shell portion is excessively thinner than a size of the positive electrode active material, a discontinuous coating structure in the form of an island may be formed (the core portion may not be covered as a whole), and, accordingly, there is a problem in that the thermal stability of the positive electrode active material is not improved or is poor. In addition, in a case in which the thickness of the shell portion with respect to the average particle diameter ($D_{50}$) of the positive electrode active material is greater than 0.15, since the thickness of the shell portion is excessively thicker than the size of the positive electrode active material, a spinel structure may be formed by growth of the manganese alone, and, accordingly, there is a problem in that structural stability of the positive electrode active material is degraded and problems, such as abrupt voltage drop or degradation of the life characteristics, may occur when the positive electrode active material is used in a lithium secondary battery.

According to the present invention, the thickness of the shell portion may be in a range of 100 nm to 600 nm. For example, the thickness of the shell portion may be in a range of 200 nm to 600 nm or 100 nm to 300 nm. In a case in which the thickness of the shell portion is within the above range, a role of the shell portion as the particle protective layer may be optimized.

According to the present invention, the average particle diameter ($D_{50}$) of the positive electrode active material may be in a range of 1 um to 100 um. The average particle diameter ($D_{50}$) of the positive electrode active material may specifically be in a range of 3 um to 50 $\mu$m, for example, 4 pm to 20 um. In a case in which the average particle diameter ($D_{50}$) of the positive electrode active material is within the above range, it is easy to control a loading amount of the positive electrode active material during preparation of a positive electrode, and a positive electrode active material layer may be formed to have high energy density.

According to the present invention, the lithium transition metal oxide, in which the molar ratio of the Ni in the total transition metals is 80 mol% or more, included in the core portion may have a composition represented by Formula 1 below. In the lithium transition metal oxide included in the core portion, since the molar ratio of the Ni in the total transition metals is 80 mol% or more, the molar ratio of the Mn in the total transition metals is 20 mol% or less.

[Formula 1] $\quad\quad\quad$ $Li_{x1}[Ni_aCo_bM1_c]O_2$

In Formula 1, M1 is at least one selected from manganese (Mn), aluminum (Al), boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W), and $0.9 \leq x1 \leq 1.1$, $0.8 \leq a \leq 1$, $0 \leq b \leq 0.2$, $0 \leq c \leq 0.2$, and $a+b+c=1$.

M1 may be at least one selected from Mn, Al, B, Mg, Ca, Ti, V, Cr, Fe, Zn, Ga, Y, Zr, Nb, Mo, Ta, and W. M1 may preferably be Mn, Al, Zr, or B. In a case in which the element M1 is additionally included, effects, such as crystal structure stabilization and surface stabilization, may be obtained.

x1 represents a molar ratio of lithium in the lithium transition metal oxide, wherein x1 may satisfy $0.9 \leq x1 \leq 1.1$, $0.95 \leq x1 \leq 1.1$, or $0.95 \leq x1 \leq 1.05$. When the molar ratio of the lithium in the lithium transition metal oxide satisfies the above range, since a layered crystal structure may be well developed, a positive electrode active material with excellent electrochemical properties may be obtained.

a represents a molar ratio of nickel among metallic components excluding lithium in the lithium transition metal oxide, wherein a may satisfy $0.8 \leq a \leq 1$, $0.8 \leq a < 1$, or $0.85 \leq a < 1$. When the molar ratio of the nickel satisfies the above range, high-capacity characteristics may be achieved.

b represents a molar ratio of cobalt among the metallic components excluding lithium in the lithium transition metal oxide, wherein b may satisfy $0 \leq b \leq 0.2$, $0 < b \leq 0.2$, or $0 < b \leq 0.15$.

c represents a molar ratio of element M1 among the metallic components excluding lithium in the lithium transition metal oxide, wherein c may satisfy $0 \leq c \leq 0.2$, $0 < c \leq 0.2$, or $0 < c \leq 0.15$.

According to the present invention, the lithium transition metal oxide, in which the molar ratio of the Mn in the total transition metals is 30 mol% or more, included in the shell portion may have a composition represented by Formula 2 below.

$$[\text{Formula 2}] \qquad Li_{x2}[Mn_d M2_e]O_2$$

In Formula 2, M2 is at least one selected from Ni, cobalt (Co), Al, B, Mg, Ca, Ti, V, Cr, Fe, Zn, Ga, Y, Zr, Nb, Mo, Ta, and W, and $0.9 \leq x2 \leq 1.1$, $0.3 \leq d \leq 1$, $0 \leq e \leq 0.7$, and $d+e=1$.

M2 may be at least one selected from Ni, Co, Al, B, Mg, Ca, Ti, V, Cr, Fe, Zn, Ga, Y, Zr, Nb, Mo, Ta, and W. M2 may preferably be Ni, Co, Al, Zr, or B. In a case in which the element M2 is additionally included, the effects, such as crystal structure stabilization and surface stabilization, may be obtained.

x2 represents a molar ratio of lithium in the lithium transition metal oxide, wherein x2 may satisfy $0.9 \leq x2 \leq 1.1$, $0.95 \leq x2 \leq 1.1$, or $0.95 \leq x2 \leq 1.05$. When the molar ratio of the lithium in the lithium transition metal oxide satisfies the above range, since a layered crystal structure may be well developed, a positive electrode active material with excellent electrochemical properties may be obtained.

d represents a molar ratio of manganese among metallic components excluding lithium in the lithium transition metal oxide, wherein d may satisfy $0.3 \leq d \leq 1$, $0.3 \leq d < 1$, or $0.32 \leq d < 1$. When the molar ratio of the manganese satisfies the above range, the thermal stability and long-term life characteristics may be improved.

e represents a molar ratio of element M2 among the metallic components excluding lithium in the lithium transition metal oxide, wherein e may satisfy $0 \leq e \leq 0.7$, $0 < e \leq 0.7$, or $0 < e \leq 0.68$.

In the positive electrode active material according to the present invention, a Mn concentration is higher at the surface of the positive electrode active material than in a center. Specifically, the molar ratio of the Mn in the total transition metals in the shell portion may be in a range of 30 mol% to 100 mol%, for example, 32 mol% to 100 mol%, and the molar ratio of the Mn in the total transition metals in the core portion may be in a range of 0 mol% to 20 mol%, for example, 0 mol% to 15 mol%.

**Method of Preparing Positive Electrode Active Material**

Next, a method of preparing a positive electrode active material of the present invention will be described.

The method of preparing a positive electrode active material according to the present invention includes the step of: (1) preparing a multilayer-structured precursor for a positive electrode active material in which two or more elements among nickel, cobalt, and manganese are precipitated in different regions; and (2) mixing the precursor for a positive electrode active material with a lithium raw material and sintering the mixture.

**(1) Preparing of Precursor for Positive Electrode Active Material**

First, a multilayer-structured precursor for a positive electrode active material, in which two or more elements among nickel, cobalt, and manganese are precipitated in different regions, is prepared.

Conventionally, in order to prepare a precursor for a positive electrode active material which includes nickel, cobalt, and manganese, a method was used in which a nickel raw material, a cobalt raw material, and a manganese raw material were dissolved in a solvent, such as water, to prepare a metal solution containing nickel, cobalt and manganese, the solution containing nickel, cobalt and manganese, an ammonium cationic complexing agent, and a basic compound were added to a reactor, and a co-precipitation reaction was performed. If the conventional method as described above is used, a nickel-cobalt-manganese hydroxide, in which nickel, cobalt, and manganese are distributed in a uniform composition throughout a precursor particle, is prepared.

In contrast, the present invention is characterized in that two or more elements among nickel, cobalt, and manganese are included in different separate solutions, and a precursor for a positive electrode active material is prepared by changing their time of addition to the reactor. If the positive electrode active material is prepared by the method according to the present invention, a multilayer-structured precursor for a positive electrode active material, in which two or more elements among nickel, cobalt, and manganese are precipitated in different regions, is prepared, and, if the multilayer-structured precursor as described above is used, a positive electrode active material, in which compositions of the core portion and the shell portion are different, may be prepared.

Specifically, the multilayer-structured precursor for a positive electrode active material, in which two or more elements among nickel, cobalt, and manganese are precipitated in different regions, may be prepared by the following methods (I) or (II).

Method (I):

First, a co-precipitation reaction is performed while adding a metal solution containing nickel and cobalt, an ammonium cationic complexing agent, and a basic compound to form nickel-cobalt hydroxide particles. As described above, if the nickel-cobalt hydroxide particles are prepared by coprecipitating nickel and cobalt at the same time, the hydroxide particles having a constant concentration of nickel and cobalt throughout the particle are obtained.

In this case, the co-precipitation reaction, for example, may be performed in such a manner that, after the reaction is performed for a certain period of time under a condition that a pH of a reaction solution is in a range of 11.5 to 12.5, preferably, 11.8 to 12.3 to form nuclei of hydroxide particles, the pH of the reaction solution is adjusted to be lower than the above pH, and an additional reaction is performed to grow the hydroxide particles.

The metal solution containing nickel and cobalt may be prepared by dissolving a nickel raw material and a cobalt raw material in a solvent such as water.

The nickel raw material may be acetic acid salts, carbonates, nitrates, sulfates, halides, sulfides, or oxides of nickel, and may specifically be $NiO$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a nickel halide, or a combination thereof, but the present invention is not limited thereto.

The cobalt raw material may be acetic acid salts, carbonates, nitrates, sulfates, halides, sulfides, or oxides of cobalt metal, and may specifically be $CoSO_4$, $Co(OCOCH_3)_2 \cdot 4H_2O$, $Co(NO_3)_2 \cdot 6H_2O$, $Co(SO_4)_2 \cdot 7H_2O$, or a combination thereof, but the present invention is not limited thereto.

The metal solution containing nickel and cobalt may further include a raw material including at least one metal selected from Mn, Al, B, Mg, Ca, Ti, V, Cr, Fe, Zn, Ga, Y, Zr, Nb, Mo, Ta, and W, if necessary.

The ammonium cationic complexing agent may be at least one selected from $NH_4OH$, $(NH_4)_2SO_4$, $NH_4NO_3$, $NH_4Cl$, $CH_3COONH_4$, and $NH_4CO_3$, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

The basic compound may be at least one selected from $NaOH$, $KOH$, and $Ca(OH)_2$, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

Next, the addition of the metal solution containing nickel and cobalt is stopped, and a co-precipitation reaction is performed while adding a metal solution containing nickel, cobalt, and manganese, an ammonium cationic complexing agent, and a basic compound to a reaction solution containing the nickel-cobalt hydroxide particles. As a result, particles, in which a nickel-cobalt-manganese hydroxide is formed on the nickel-cobalt hydroxide particles, are obtained. That is, a two-layer-structured precursor for a positive electrode active material, in which the nickel-cobalt-manganese hydroxide is co-precipitated on surfaces of the nickel-cobalt hydroxide particles, is prepared.

In this case, the co-precipitation reaction may be performed under a condition that a pH of the reaction solution is in a range of 11.0 to 12.0.

The metal solution containing nickel, cobalt, and manganese may be prepared by dissolving a nickel raw material, a cobalt raw material, and a manganese raw material in a solvent such as water.

The manganese raw material may be acetic acid salts, carbonates, nitrates, sulfates, halides, sulfides, or oxides of manganese metal, and may specifically be $Mn_3O_3$, $MnO_2$, $Mn_3O_4$, $MnCO_3$, $Mn(NO_3)_2$, $MnSO_4 \cdot H_2O$, manganese acetate, manganese halide, or a combination thereof, but the present invention is not limited thereto.

The nickel raw material, the cobalt raw material, the ammonium cationic complexing agent, and the basic compound are the same as described above.

The metal solution containing nickel, cobalt, and manganese may further include a raw material including at least one metal selected from Al, B, Mg, Ca, Ti, V, Cr, Fe, Zn, Ga, Y, Zr, Nb, Mo, Ta, and W, if necessary.

Method (II):

First, a precipitation reaction is performed while adding a metal solution containing nickel, an ammonium cationic complexing agent, and a basic compound to form nickel hydroxide particles.

In this case, the precipitation reaction of the nickel hydroxide may be performed under a condition that a pH of a reaction solution is in a range of 11.4 to 11.8. When the pH of the reaction solution satisfies the above range, precipitation of nickel may be smoothly performed.

The metal solution containing nickel may be prepared by dissolving a nickel raw material in a solvent such as water.

The metal solution containing nickel may further include a raw material including at least one metal selected from Co, Mn, Al, B, Mg, Ca, Ti, V, Cr, Fe, Zn, Ga, Y, Zr, Nb, Mo, Ta, and W, if necessary.

The nickel raw material, the ammonium cationic complexing agent, and the basic compound are the same as described above.

Next, the addition of the metal solution containing nickel is stopped, and a precipitation reaction is performed while adding a metal solution containing manganese, an ammonium cationic complexing agent, and a basic compound to a reaction solution containing the nickel hydroxide particles to form nickel/manganese hydroxide particles in which a manganese hydroxide is precipitated on the nickel hydroxide particles.

In this case, the precipitation reaction of the manganese hydroxide may be performed under a condition that a pH of the reaction solution is in a range of 11.0 or less, preferably, 10.0 to 11.0. When the pH of the reaction solution satisfies the above range, precipitation of manganese is smoothly performed.

The metal solution containing manganese may be prepared by dissolving a manganese raw material in a solvent such as water.

The metal solution containing manganese may further include a raw material including at least one metal selected from Ni, Co, Al, B, Mg, Ca, Ti, V, Cr, Fe, Zn, Ga, Y, Zr, Nb, Mo, Ta, and W, if necessary.

The manganese raw material, the ammonium cationic complexing agent, and the basic compound are the same as described above.

Next, the addition of the metal solution containing manganese is stopped, and a precipitation reaction is performed while adding a metal solution containing cobalt, an ammonium cationic complexing agent, and a basic compound to a reaction solution containing the nickel/manganese hydroxide to form nickel/manganese/cobalt hydroxide particles in which a cobalt hydroxide is precipitated on the nickel/manganese hydroxide particles. A three-layer-structured nickel/manganese/cobalt hydroxide, in which nickel hydroxide, manganese hydroxide, and cobalt hydroxide are sequentially precipitated, may be prepared by the above method.

In this case, the precipitation reaction of the cobalt hydroxide may be performed under a condition that a pH of the reaction solution is in a range of 11.0 to 11.4. When the pH of the reaction solution satisfies the above range, precipitation of cobalt may be smoothly performed.

The metal solution containing cobalt may be prepared by dissolving a cobalt raw material in a solvent such as water.

The metal solution containing cobalt may further include a raw material including at least one metal selected from Ni, Mn, Al, B, Mg, Ca, Ti, V, Cr, Fe, Zn, Ga, Y, Zr, Nb, Mo, Ta, and W, if necessary.

The cobalt raw material, the ammonium cationic complexing agent, and the basic compound are the same as described above.

A multilayer-structured precursor for a positive electrode active material, in which at least two elements among nickel, cobalt, and manganese are precipitated in different regions, may be prepared through the method (I) or (II). If the precursor particles grow to a desired particle diameter, the reaction is ended, and the precursor for a positive electrode active material is separated from the reaction solution and then dried to obtain a precursor for a positive electrode active material.

**(2) Mixing of the Precursor for Positive Electrode Active Material with Lithium Raw Material and Sintering the Mixture**

Next, the precursor for a positive electrode active material prepared by the above-described method is mixed with a lithium raw material and then sintered to prepare the positive electrode active material according to the present invention.

The lithium raw material, for example, may include lithium-containing carbonates (e.g., lithium carbonate, etc.),

hydrates (e.g., lithium hydroxide hydrate (LiOH·$H_2O$), etc.), hydroxides (e.g., lithium hydroxide, etc.), nitrates (e.g., lithium nitrate ($LiNO_3$), etc.), and chlorides (e.g., lithium chloride (LiCl), etc.), and any one thereof or a mixture of two or more thereof may be used.

The mixing of the precursor for a positive electrode active material and the lithium raw material may be performed by solid-phase mixing, and a mixing ratio of the precursor for a positive electrode active material to the lithium raw material may be determined in a range that satisfies an atomic fraction of each component in the finally prepared positive electrode active material. For example, the precursor for a positive electrode active material and the lithium raw material may be mixed in amounts such that a molar ratio of transition metal : lithium (Li) is in a range of 1:0.8 to 1:1.2, preferably 1:0.85 to 1:1.15, and more preferably 1:0.9 to 1:1.1. In a case in which the precursor and the lithium raw material are mixed within the above range, a positive electrode active material exhibiting excellent capacity characteristics may be prepared.

For reference, with respect to the three-layer-structured nickel/manganese/cobalt hydroxide in which the nickel hydroxide, the manganese hydroxide, and the cobalt hydroxide are sequentially precipitated, cobalt with high diffusivity easily penetrates into the particles during sintering after mixing with the lithium raw material to prepare a positive electrode material having a high manganese content on a surface thereof.

Also, if necessary, a doping element-containing material may be further mixed during the sintering. The doping element, for example, may be at least one selected from Al, B, Mg, Ca, Ti, V, Cr, Fe, Zn, Ga, Y, Zr, Nb, Mo, Ta, and W, and the doping element-containing raw material may be doping element-containing acetic acid salts, sulfates, sulfides, hydroxides, or oxyhydroxides.

The sintering may be performed at 600°C to 1,000°C, for example, at 700°C to 900°C, and sintering time may be in a range of 5 hours to 30 hours, for example, 8 hours to 15 hours, but the present invention is not limited thereto.

The present invention may further include a process of mixing a coating element-containing raw material and performing a heat treatment after the sintering. In this case, the positive electrode active material according to the present invention may be coated with a coating layer.

A metallic element included in the coating element-containing raw material may be Zr, B, W, Mo, Cr, Nb, Mg, hafnium (Hf), Ta, lanthanum (La), Ti, strontium (Sr), barium (Ba), cerium (Ce), fluorine (F), phosphorus (P), sulfur (S), and Y. The coating element-containing raw material may be an acetate, nitrate, sulfate, halide, sulfide, hydroxide, oxide, or oxyhydroxide which contains the metallic element. For example, in a case in which the metallic element is B, boric acid ($H_3BO_3$) may be used.

The coating element-containing raw material may be included in a weight of 200 ppm to 2,000 ppm (0.02 wt% to 0.2 wt%) based on the lithium transition metal oxide. In a case in which the amount of the coating element-containing raw material is within the above range, capacity of the battery may be improved, and the coating layer formed may suppress a direct reaction between the electrolyte solution and the lithium transition metal oxide to improve long-term performance characteristics of the battery.

The heat treatment may be performed in a temperature range of 200°C to 400°C. In a case in which the heat treatment temperature is within the above range, a coating layer may be formed while structural stability of the transition metal oxide is maintained. The heat treatment may be performed for 1 hour to 10 hours. In a case in which the heat treatment time is within the above range, an appropriate coating layer may be formed and production efficiency may be improved.

**Positive Electrode**

Next, a positive electrode according to the present invention will be described.

The positive electrode according to the present invention includes the above-described positive electrode active material according to the present invention. Specifically, the positive electrode includes a positive electrode collector and a positive electrode active material layer formed on the positive electrode collector, wherein the positive electrode active material layer includes a positive electrode active material according to the present invention.

Since the positive electrode active material has been described above, detailed descriptions thereof will be omitted, and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 μm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer (positive electrode slurry), which is prepared by dissolving or dispersing the positive electrode active material as well as optionally the binder and the conductive agent in a solvent, is coated on the positive electrode collector, and the positive electrode may then be prepared by drying and rolling the coated positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

**Lithium Secondary Battery**

Next, a lithium secondary battery according to the present invention will be described.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder may typically be added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, an anion of the lithium salt may be at least one selected from $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, the present invention will be described in detail, according to specific examples.

## Examples and Comparative Examples

Example 1 : Ni, Co Co-precipitation → Ni, Co, Mn Co-**precipitation**

$NiSO_4$ and $CoSO_4$ were added to distilled water in amounts such that a molar ratio of Ni : Co was 95 : 5 to prepare a first metal solution with a concentration of 2.4 M. $NiSO_4$, $CoSO_4$, and $MnSO_4$ were added to distilled water in amounts such that a molar ratio of Ni : Co : Mn was 61 : 5 : 34 to separately prepare a second metal solution with a concentration of 2.4 M. Also, a NaOH aqueous solution with a concentration of 8.0 M and a $NH_4OH$ aqueous solution with a concentration of 5.1 M were prepared.

After 18 L of deionized water, 0.025 L of the NaOH aqueous solution, and 0.71 L of the $NH_4OH$ aqueous solution were put into a reactor, dissolved oxygen in the water was removed by purging the reactor with nitrogen gas to create a non-oxidizing atmosphere in the reactor.

Then, a precipitation reaction was performed for 0.2 hours at a pH of 11.9 while adding the first metal solution at a rate of 5.0 L/hr, the NaOH aqueous solution at a rate of 3.0 L/hr, and the $NH_4OH$ aqueous solution at a rate of 0.70 L/hr, respectively, to the reactor to form nuclei of nickel-cobalt hydroxide particles. Thereafter, after stirring speed was sequentially reduced and NaOH was added with a pH sensor being involved to adjust a pH of a reaction solution to 11.4, a co-precipitation reaction was performed for 38.2 hours while adding the first metal solution, the NaOH aqueous solution, and the $NH_4OH$ aqueous solution at rates of 5.00 L/hr, 3.00 L/hr, and 0.70 L/hr, respectively, to prepare a core portion including nickel-cobalt hydroxide particles.

Thereafter, after the addition of the first metal solution was stopped and NaOH was added with a pH sensor being involved to adjust the pH of the reaction solution to 11.4, a precipitation reaction was performed for 9.6 hours while the second metal solution, the NaOH aqueous solution, and the $NH_4OH$ aqueous solution were added at rates of 5.00 L/hr, 3.00 L/hr, and 0.70 L/hr, respectively, and stirred to prepare a precursor for a positive electrode active material in which a nickel-cobalt-manganese hydroxide was precipitated on the core portion including nickel-cobalt hydroxide particles. A molar ratio of Ni : Co : Mn of the entire precursor particle for a positive electrode active material was 88 : 5 : 7.

The precursor for a positive electrode active material prepared as described above, $LiOH \cdot H_2O$, and $Al(OH)_3$ were mixed so that a molar ratio of Ni+CO+Mn : Li : Al was 0.98 : 1.05 : 0.02, sintered at 765°C for 13 hours, ground, washed, and dried to prepare a positive electrode active material. A molar ratio of Ni : Co : Mn : Al of the prepared entire positive electrode active material particle was 86 : 5 : 7 : 2.

Thereafter, 1,000 ppm (0.1 wt%) of $H_3BO_3$ was mixed with the positive electrode active material prepared as described above, and heat-treated at 295°C for 5 hours in an air atmosphere to prepare a B-coated positive electrode active material.

## Example 2 : Ni Precipitation → Mn Precipitation → Co Precipitation

$NiSO_4$ was added to distilled water to prepare a first metal solution with a concentration of 2.4 M. $MnSO_4$ was added to distilled water to prepare a second metal solution with a concentration of 2.4 M. $CoSO_4$ was added to distilled water to prepare a third metal solution with a concentration of 2.4 M. Also, a NaOH aqueous solution with a concentration of 8.0 M and a $NH_4OH$ aqueous solution with a concentration of 5.1 M were prepared.

After 18 L of deionized water, 0.025 L of the NaOH aqueous solution, and 0.71 L of the $NH_4OH$ aqueous solution were put into a reactor, dissolved oxygen in the water was removed by purging the reactor with nitrogen gas to create a non-oxidizing atmosphere in the reactor.

Then, the first metal solution, the NaOH aqueous solution, and the $NH_4OH$ aqueous solution were added at rates of 3.8 L/hr, 2.3 L/hr, and 0.54 L/hr, respectively, to perform a precipitation reaction for 42.2 hours. In this case, a pH of a reaction solution was maintained at 11.6.

Thereafter, after the addition of the first metal solution was stopped and the pH of the reaction solution was adjusted to a range of 10.8 to 11.0 by adding NaOH with a pH sensor being involved, the second metal solution, the NaOH aqueous solution, and the $NH_4OH$ aqueous solution were added at rates of 3.8 L/hr, 2.3 L/hr, and 0.54 L/hr, respectively, to perform a precipitation reaction for 3.4 hours.

Then, after the addition of the second metal solution was stopped and the pH of the reaction solution was adjusted to 11.4 by adding NaOH with a pH sensor being involved, the third metal solution, the NaOH aqueous solution, and the $NH_4OH$ aqueous solution were added at rates of 3.8 L/hr, 2.3 L/hr, and 0.54 L/hr, respectively, and a precipitation reaction was performed for 2.4 hours to prepare a precursor for a positive electrode active material. A molar ratio of Ni : Co : Mn of the entire precursor particle for a positive electrode active material was 88 : 5 : 7.

The precursor for a positive electrode active material prepared as described above, $LiOH \cdot H_2O$, and $Al(OH)_3$ were mixed so that a molar ratio of Ni+CO+Mn : Li : Al was 0.98 : 1.05 : 0.02, sintered at 765°C for 13 hours, ground, washed, and dried to prepare a positive electrode active material. A molar ratio of Ni : Co : Mn : Al of the prepared entire positive electrode active material particle was 86 : 5 : 7 : 2.

Thereafter, 0.1 wt% of $H_3BO_3$ was mixed with the positive electrode active material prepared as described above, and heat-treated at 295°C for 5 hours in an air atmosphere to prepare a B-coated positive electrode active material.

## Example 3 : Ni, Co Co-precipitation → Ni, Co, Mn Co-precipitation

$NiSO_4$ and $CoSO_4$ were added to distilled water in amounts such that a molar ratio of Ni : Co was 95 : 5 to prepare a first metal solution with a concentration of 2.4 M. $NiSO_4$, $CoSO_4$, and $MnSO_4$ were added to distilled water in amounts such that a molar ratio of Ni : Co : Mn was 5 : 5 : 90 to separately prepare a second metal solution with a concentration of 2.4 M. Also, a NaOH aqueous solution with a concentration of 8.0 M and a $NH_4OH$ aqueous solution with a concentration of 5.1 M were prepared.

After 18 L of deionized water, 0.025 L of the NaOH aqueous solution, and 0.71 L of the $NH_4OH$ aqueous solution were put into a reactor, dissolved oxygen in the water was removed by purging the reactor with nitrogen gas to create a non-oxidizing atmosphere in the reactor.

Then, a precipitation reaction was performed for 0.2 hours at a pH of 11.9 while adding the first metal solution at a rate of 5.00 L/hr, the NaOH aqueous solution at a rate of 3.00 L/hr, and the NH$_4$OH aqueous solution at a rate of 0.70 L/hr, respectively, to the reactor to form nuclei of nickel-cobalt hydroxide particles. Thereafter, after stirring speed was sequentially reduced and NaOH was added with a pH sensor being involved to adjust a pH of a reaction solution to 11.4, a co-precipitation reaction was performed for 64.2 hours while adding the first metal solution, the NaOH aqueous solution, and the NH$_4$OH aqueous solution at rates of 5.00 L/hr, 3.00 L/hr, and 0.70 L/hr, respectively, to prepare a core portion including nickel-cobalt hydroxide particles.

Thereafter, after the addition of the first metal solution was stopped and NaOH was added with a pH sensor being involved to adjust the pH of the reaction solution to 11.4, a precipitation reaction was performed for 5.6 hours while the second metal solution, the NaOH aqueous solution, and the NH$_4$OH aqueous solution were added at rates of 5.00 L/hr, 3.00 L/hr, and 0.70 L/hr, respectively, and stirred to prepare a precursor for a positive electrode active material in which a nickel-cobalt-manganese hydroxide was precipitated on the core portion including nickel-cobalt hydroxide particles. A molar ratio of Ni : Co : Mn of the entire precursor particle for a positive electrode active material was 88 : 5 : 7.

The precursor for a positive electrode active material prepared as described above, LiOH·H$_2$O, and Al(OH)$_3$ were mixed so that a molar ratio of Ni+CO+Mn : Li : Al was 0.98 : 1.05 : 0.02, sintered at 765°C for 13 hours, ground, washed, and dried to prepare a positive electrode active material. A molar ratio of Ni : Co : Mn : Al of the prepared entire positive electrode active material particle was 86 : 5 : 7 : 2.

Thereafter, 0.1 wt% of H$_3$BO$_3$ was mixed with the positive electrode active material prepared as described above, and heat-treated at 295°C for 5 hours in an air atmosphere to prepare a B-coated positive electrode active material.

**Example 4 : Ni, Co Co-precipitation → Ni, Co, Mn Co-precipitation**

NiSO$_4$ and CoSO$_4$ were added to distilled water in amounts such that a molar ratio of Ni : Co was 95 : 5 to prepare a first metal solution with a concentration of 2.4 M. NiSO$_4$, CoSO$_4$, and MnSO$_4$ were added to distilled water in amounts such that a molar ratio of Ni : Co : Mn was 61 : 5 : 34 to separately prepare a second metal solution with a concentration of 2.4 M. Also, a NaOH aqueous solution with a concentration of 8.0 M and a NH$_4$OH aqueous solution with a concentration of 5.1 M were prepared.

After 18 L of deionized water, 0.025 L of the NaOH aqueous solution, and 0.71 L of the NH$_4$OH aqueous solution were put into a reactor, dissolved oxygen in the water was removed by purging the reactor with nitrogen gas to create a non-oxidizing atmosphere in the reactor.

Then, a precipitation reaction was performed for 0.2 hours at a pH of 11.9 while adding the first metal solution at a rate of 5.00 L/hr, the NaOH aqueous solution at a rate of 3.00 L/hr, and the NH$_4$OH aqueous solution at a rate of 0.70 L/hr, respectively, to the reactor to form nuclei of nickel-cobalt hydroxide particles. Thereafter, after stirring speed was sequentially reduced and NaOH was added with a pH sensor being involved to adjust a pH of a reaction solution to 11.4, a co-precipitation reaction was performed for 15.4 hours while adding the first metal solution, the NaOH aqueous solution, and the NH$_4$OH aqueous solution at rates of 5.00 L/hr, 3.00 L/hr, and 0.70 L/hr, respectively, to prepare a core portion including nickel-cobalt hydroxide particles.

Thereafter, after the addition of the first metal solution was stopped and NaOH was added with a pH sensor being involved to adjust the pH of the reaction solution to 11.4, a precipitation reaction was performed for 4.4 hours while the second metal solution, the NaOH aqueous solution, and the NH$_4$OH aqueous solution were added at rates of 5.00 L/hr, 3.00 L/hr, and 0.70 L/hr, respectively, and stirred to prepare a precursor for a positive electrode active material in which a nickel-cobalt-manganese hydroxide was precipitated on the core portion including nickel-cobalt hydroxide particles. A molar ratio of Ni : Co : Mn of the entire precursor particle for a positive electrode active material was 88 : 5 : 7.

The precursor for a positive electrode active material prepared as described above, LiOH·H$_2$O, and Al(OH)$_3$ were mixed so that a molar ratio of Ni+CO+Mn : Li : Al was 0.98 : 1.05 : 0.02, sintered at 765°C for 13 hours, ground, washed, and dried to prepare a positive electrode active material. A molar ratio of Ni : Co : Mn : Al of the prepared entire positive electrode active material particle was 86 : 5 : 7 : 2.

Thereafter, 0.1 wt% of H$_3$BO$_3$ was mixed with the positive electrode active material prepared as described above, and heat-treated at 295°C for 5 hours in an air atmosphere to prepare a B-coated positive electrode active material.

**Comparative Example 1**

NiSO$_4$, CoSO$_4$, and MnSO$_4$ were mixed in distilled water in amounts such that a molar ratio of nickel:cobalt:manganese was 88 : 5 : 7 to prepare a metal solution with a concentration of 2.4 M. Also, a NaOH aqueous solution with a concentration of 8.0 M and a NH$_4$OH aqueous solution with a concentration of 5.1 M were prepared.

After 18 L of deionized water, 0.025 L of the NaOH aqueous solution, and 0.71 L of the NH$_4$OH aqueous solution were put into a reactor, dissolved oxygen in the water was removed by purging the reactor with nitrogen gas to create a non-oxidizing atmosphere in the reactor.

Then, while a pH of a reaction solution was maintained at 11.2 to 11.9 by adding the metal solution, the NaOH aqueous solution, and the $NH_4OH$ aqueous solution at rates of 3.8 L/hr, 2.3 L/hr, and 0.54 L/hr, respectively, a co-precipitation reaction was performed for 48 hours to prepare a precursor for a positive electrode active material. A molar ratio of Ni : Co : Mn of the entire precursor particle for a positive electrode active material was 88 : 5 : 7.

The precursor for a positive electrode active material prepared as described above, $LiOH \cdot H_2O$, and $Al(OH)_3$ were mixed so that a molar ratio of Ni+CO+Mn : Li : Al was 0.98 : 1.05 : 0.02, sintered at 765°C for 13 hours, ground, washed, and dried to prepare a positive electrode active material. A molar ratio of Ni : Co : Mn : Al of the prepared entire positive electrode active material particle was 86 : 5 : 7 : 2.

Thereafter, 0.1 wt% of $H_3BO_3$ was mixed with the positive electrode active material prepared as described above, and heat-treated at 295°C for 5 hours in an air atmosphere to prepare a B-coated positive electrode active material.

**Comparative Example 2**

$NiSO_4$ and $CoSO_4$ were added to distilled water in amounts such that a molar ratio of Ni : Co was 95 : 5 to prepare a first metal solution with a concentration of 2.4 M. $NiSO_4$, $CoSO_4$, and $MnSO_4$ were added to distilled water in amounts such that a molar ratio of Ni : Co : Mn was 5 : 5 : 90 to separately prepare a second metal solution with a concentration of 2.4 M. Also, a NaOH aqueous solution with a concentration of 8.0 M and a $NH_4OH$ aqueous solution with a concentration of 5.1 M were prepared.

After 18 L of deionized water, 0.025 L of the NaOH aqueous solution, and 0.71 L of the $NH_4OH$ aqueous solution were put into a reactor, dissolved oxygen in the water was removed by purging the reactor with nitrogen gas to create a non-oxidizing atmosphere in the reactor.

Then, a precipitation reaction was performed for 0.2 hours at a pH of 11.9 while adding the first metal solution at a rate of 5.00 L/hr, the NaOH aqueous solution at a rate of 3.00 L/hr, and the $NH_4OH$ aqueous solution at a rate of 0.70 L/hr, respectively, to the reactor to form nuclei of nickel-cobalt hydroxide particles. Thereafter, after stirring speed was sequentially reduced and NaOH was added with a pH sensor being involved to adjust a pH of a reaction solution to 11.4, a co-precipitation reaction was performed for 67.5 hours while adding the first metal solution, the NaOH aqueous solution, and the $NH_4OH$ aqueous solution at rates of 5.00 L/hr, 3.00 L/hr, and 0.70 L/hr, respectively, to prepare a core portion including nickel-cobalt hydroxide particles.

Thereafter, after the addition of the first metal solution was stopped and NaOH was added with a pH sensor being involved to adjust the pH of the reaction solution to 11.4, a precipitation reaction was performed for 5.3 hours while the second metal solution, the NaOH aqueous solution, and the $NH_4OH$ aqueous solution were added at rates of 5.00 L/hr, 3.00 L/hr, and 0.70 L/hr, respectively, and stirred to prepare a precursor for a positive electrode active material in which a nickel-cobalt-manganese hydroxide was precipitated on the core portion including nickel-cobalt hydroxide particles. A molar ratio of Ni : Co : Mn of the entire precursor particle for a positive electrode active material was 88 : 5 : 7.

The precursor for a positive electrode active material prepared as described above, $LiOH \cdot H_2O$, and $Al(OH)_3$ were mixed so that a molar ratio of Ni+CO+Mn : Li : Al was 0.98 : 1.05 : 0.02, sintered at 765°C for 13 hours, ground, washed, and dried to prepare a positive electrode active material. A molar ratio of Ni : Co : Mn : Al of the prepared entire positive electrode active material particle was 86 : 5 : 7 : 2.

Thereafter, 0.1 wt% of $H_3BO_3$ was mixed with the positive electrode active material prepared as described above, and heat-treated at 295°C for 5 hours in an air atmosphere to prepare a B-coated positive electrode active material.

**Comparative Example 3**

$NiSO_4$ and $CoSO_4$ were added to distilled water in amounts such that a molar ratio of Ni : Co was 95 : 5 to prepare a first metal solution with a concentration of 2.4 M. $NiSO_4$, $CoSO_4$, and $MnSO_4$ were added to distilled water in amounts such that a molar ratio of Ni : Co : Mn was 68 : 5 : 27 to separately prepare a second metal solution with a concentration of 2.4 M. Also, a NaOH aqueous solution with a concentration of 8.0 M and a $NH_4OH$ aqueous solution with a concentration of 5.1 M were prepared.

After 18 L of deionized water, 0.025 L of the NaOH aqueous solution, and 0.71 L of the $NH_4OH$ aqueous solution were put into a reactor, dissolved oxygen in the water was removed by purging the reactor with nitrogen gas to create a non-oxidizing atmosphere in the reactor.

Then, a precipitation reaction was performed for 0.2 hours at a pH of 11.9 while adding the first metal solution at a rate of 5.00 L/hr, the NaOH aqueous solution at a rate of 3.00 L/hr, and the $NH_4OH$ aqueous solution at a rate of 0.70 L/hr, respectively, to the reactor to form nuclei of nickel-cobalt hydroxide particles. Thereafter, after stirring speed was sequentially reduced and NaOH was added with a pH sensor being involved to adjust a pH of a reaction solution to 11.4, a co-precipitation reaction was performed for 13 hours while adding the first metal solution, the NaOH aqueous solution, and the $NH_4OH$ aqueous solution at rates of 5.00 L/hr, 3.00 L/hr, and 0.70 L/hr, respectively, to prepare a core portion including nickel-cobalt hydroxide particles.

Thereafter, after the addition of the first metal solution was stopped and NaOH was added with a pH sensor being involved to adjust the pH of the reaction solution to 11.4, a precipitation reaction was performed for 4.8 hours while the second metal solution, the NaOH aqueous solution, and the $NH_4OH$ aqueous solution were added at rates of 5.00 L/hr, 3.00 L/hr, and 0.70 L/hr, respectively, and stirred to prepare a precursor for a positive electrode active material in which a nickel-cobalt-manganese hydroxide was precipitated on the core portion including nickel-cobalt hydroxide particles. A molar ratio of Ni : Co : Mn of the entire precursor particle for a positive electrode active material was 88 : 5 : 7.

The precursor for a positive electrode active material prepared as described above, $LiOH \cdot H_2O$, and $Al(OH)_3$ were mixed so that a molar ratio of Ni+CO+Mn : Li : Al was 0.98 : 1.05 : 0.02, sintered at 765°C for 13 hours, ground, washed, and dried to prepare a positive electrode active material. A molar ratio of Ni : Co : Mn : Al of the prepared entire positive electrode active material particle was 86 : 5 : 7 : 2.

Thereafter, 0.1 wt% of $H_3BO_3$ was mixed with the positive electrode active material prepared as described above, and heat-treated at 295°C for 5 hours in an air atmosphere to prepare a B-coated positive electrode active material.

**Experimental Examples**

**Experimental Example 1: Check Composition, Average Particle Diameter, and Thickness of Shell Portion of Positive Electrode Active Material**

(1) Average Particle Diameter ($D_{50}$)

An average particle diameter ($D_{50}$) of each of the positive electrode active materials of Examples 1 to 4 and Comparative Examples 1 to 3 was measured using a particle size distribution measurement instrument (S-3500, Microtrac), and the results thereof are presented in Table 1 below.

(2) Thickness of the Shell Portion

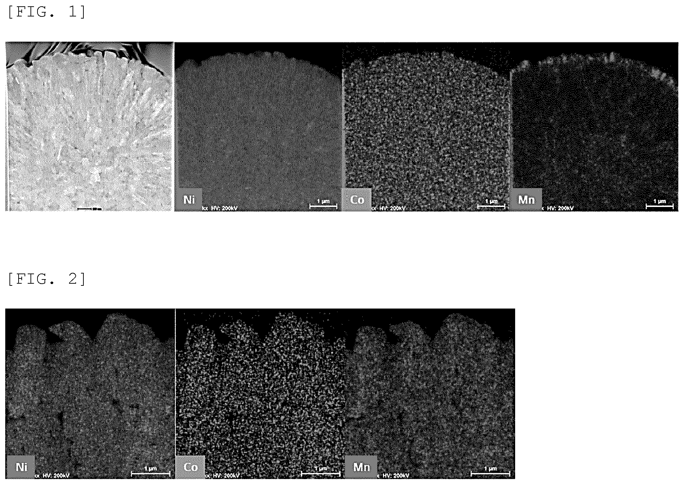

After coating each of the positive electrode active materials of Examples 1 to 4 and Comparative Examples 1 to 3 with carbon, thin film samples (thickness of about 100 nm), which may check a cross section of the particle, were prepared by irradiating the samples with an ion beam using a FIB (Focused Ion Beam) instrument (Helios NanoLab 450, FEI). The thin film sample was placed on a grid of a transmission electron microscope (TEM), energy dispersive X-ray spectroscopy (EDS) mapping images of the cross section of the particle were obtained using the TEM (Talos F200X, FEI), and a thickness of a portion (shell portion), in which a lithium transition metal oxide having a molar ratio of Mn in total transition metals of 30 mol% or more was present, was measured. Measurement results are presented in Table 1 below. FIG. 1 and FIG. 2 are TEM-EDS mapping images of the cross sections of the positive electrode active material particles of Example 1 and Comparative Example 1, respectively.

[Table 1]

| | | Positive electrode active material composition | | Average particle diameter (A) ($\mu$m) | Thicknes s of the shell portion (B) ($\mu$m) | B/A value |
|---|---|---|---|---|---|---|
| | | Core portion | Shell portion | | | |
| | Example 1 | $Li[Ni_{0.93}Co_{0.05}Al_{0.02}]O_2$ | $Li[Ni_{0.60}Co_{0.05}Mn_{0.33}Al_{0.02}]O_2$ | 10.2 | 0.3 | 0.029 |
| | Example 2 | $Li[Ni_{0.95}Co_{0.03}Al_{0.02}]O_2$ | $Li[Co_{0.26}Mn_{0.72}Al_{0.02}]O_2$ | 9.9 | 0.2 | 0.020 |
| | Example 3 | $Li[Ni_{0.93}Co_{0.05}Al_{0.02}]O_2$ | $Li[Ni_{0.05}Co_{0.05}Mn_{0.88}Al_{0.02}]O_2$ | 15.8 | 0.1 | 0.006 |
| | Example 4 | $Li[Ni_{0.93}Co_{0.05}Al_{0.02}]O_2$ | $Li[Ni_{0.60}Co_{0.05}Mn_{0.33}Al_{0.02}]O_2$ | 4.5 | 0.6 | 0.133 |
| | Comparative Example 1 | $Li[Ni_{0.86}Co_{0.05}Mn_{0.07}Al_{0.02}]O_2$ | | 10.1 | 0 | 0 |

(continued)

| | Positive electrode active material composition | | Average particle diameter (A) ($\mu$m) | Thicknes s of the shell portion (B) ($\mu$m) | B/A value |
|---|---|---|---|---|---|
| | Core portion | Shell portion | | | |
| Comparative Example 2 | Li $[Ni_{0.93}Co_{0.05}Al_{0.02}]O_2$ | Li $[Ni_{0.05}Co_{0.05}Mn_{0.88}Al_{0.02}]O_2$ | 16.5 | 0.05 | 0.003 |
| Comparative Example 3 | Li $[Ni_{0.93}Co_{0.05}Al_{0.02}]O_2$ | Li$[Ni_{0.67}Co_{0.05}Mn_{0.26}Al_{0.02}]O_2$ | 4.3 | 0.7 | 0.163 |

**Experimental Example 2: Initial Charge and Discharge Efficiency and High-temperature Life Characteristics Evaluation**

Each of the positive electrode active materials prepared by Examples 1 to 4 and Comparative Examples 1 to 3, a conductive agent (FX35), and a binder (mixture of KF9700 and BM730H in a weight ratio of 1.35:0.15) were mixed in a N-methyl-2-pyrrolidone (NMP) solvent in a weight ratio of 97.5 : 1 : 1.5 to prepare a positive electrode slurry. One surface of an aluminum current collector was coated with the positive electrode slurry, dried at 130°C, and then rolled to have a porosity of 24% to prepare each positive electrode.

A Li metal disk was used as a negative electrode.

After an electrode assembly was prepared by disposing a separator between the positive electrode and the negative electrode, each lithium secondary battery was prepared by disposing the electrode assembly in a battery case, and then injecting an electrolyte solution into the battery case. In this case, as the electrolyte solution, an electrolyte solution, in which 1 M $LiPF_6$ was dissolved in an organic solvent in which ethylene carbonate : ethyl methyl carbonate : diethyl carbonate were mixed in a volume ratio of 3 : 3 : 4, was used.

After each lithium secondary battery prepared as described above was charged at a constant current of 0.1 C to 4.25 V in a constant current/constant voltage (CC/CV) mode (termination current 0.05 C) at 25°C and was then discharged to 3.0 V in a CC mode to measure initial charge and discharge efficiency, a charge and discharge cycle was repeated 30 times at a constant current of 0.33 C in a range of 3.0 V to 4.25 V at 45°C to calculate a percentage of discharge capacity in a 30th cycle to discharge capacity in the first cycle as a capacity retention (%), and the capacity retentions are present in Table 2 below. In this case, 1C = 200 mA/g.

**Experimental Example 3: Thermal Stability Evaluation**

After each lithium secondary battery prepared as in Experimental Example 2 was charged at a constant current of 0.2 C to 4.25 V in a CC/CV mode (termination current 0.05 C) at 25°C, the battery was disassembled in a charged state, the positive electrode was washed with DMC, a heat flow was measured while the temperature was increased at 10°C/min by using a differential scanning calorimeter (DSC), and resulting onset point and calorific value are presented in Table 2 below.

[Table 2]

| | Initial charge and discharge efficiency (%) | Capacity retention (%) | DSC evaluation results | |
|---|---|---|---|---|
| | | | Onset point (°C) | Calorific value (mJ) |
| Example 1 | 93.8 | 97.2 | 223.5 | 4296 |
| Example 2 | 91.7 | 97.1 | 223.8 | 4038 |
| Example 3 | 93.6 | 97.1 | 222.8 | 4310 |
| Example 4 | 94.1 | 97.4 | 224.2 | 3987 |
| Comparative Example 1 | 91.0 | 96.2 | 219.5 | 7930 |

(continued)

|  | Initial charge and discharge efficiency (%) | Capacity retention (%) | DSC evaluation results | |
|---|---|---|---|---|
|  |  |  | Onset point (°C) | Calorific value (mJ) |
| Comparative Example 2 | 90.9 | 95.8 | 221.7 | 5157 |
| Comparative Example 3 | 91.5 | 96.1 | 221.9 | 6410 |

Referring to Tables 1 and 2, it may be confirmed that the lithium secondary batteries using the positive electrode active materials of Examples 1 to 4, in which the core portion and the shell portion of each positive electrode active material satisfied the compositions according to the present invention and a ratio of the thickness of the shell portion to the average particle diameter ($D_{50}$) of the positive electrode active material was in a range of 0.005 to 0.15, had better initial charge and discharge efficiency, high-temperature life characteristics, and thermal stability than the lithium secondary batteries using the positive electrode active materials of Comparative Examples 1 to 3.

**Claims**

1. A positive electrode active material comprising:

   a core portion including a lithium transition metal oxide in which a mole ratio of nickel (Ni) in total transition metals is 80 mol% or more; and
   a layer-structured shell portion which is formed on the core portion and includes a lithium transition metal oxide in which a molar ratio of manganese (Mn) in the total transition metals is 30 mol% or more,
   wherein the positive electrode active material satisfies Equation 1:

   [Equation 1]

   $$0.005 \leq \frac{\text{Thickness of the shell portion (}\mu\text{m)}}{\text{Average particle diameter}(D_{50})\text{ of the positive electrode active material}(\mu\text{m})} \leq 0.15 .$$

2. The positive electrode active material of claim 1, wherein the thickness of the shell portion is in a range of 100 nm to 600 nm.

3. The positive electrode active material of claim 1, wherein the average particle diameter ($D_{50}$) of the positive electrode active material is in a range of 1 um to 100 $\mu$m.

4. The positive electrode active material of claim 1, wherein the lithium transition metal oxide, in which the molar ratio of the Ni in the total transition metals is 80 mol% or more, has a composition represented by Formula 1:

   [Formula 1]     $Li_{x1}[Ni_aCo_bM1_c]O_2$

   wherein, in Formula 1,

   M1 is at least one selected from manganese (Mn), aluminum (Al), boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W), and
   $0.9 \leq x1 \leq 1.1$, $0.8 \leq a \leq 1$, $0 \leq b \leq 0.2$, $0 \leq c \leq 0.2$, and $a+b+c=1$.

5. The positive electrode active material of claim 1, wherein the lithium transition metal oxide, in which the molar ratio of the Mn in the total transition metals is 30 mol% or more, has a composition represented by Formula 2:

[Formula 2]     $Li_{x2}[Mn_dM2_e]O_2$

wherein, in Formula 2,

M2 is at least one selected from Ni, cobalt (Co), Al, B, Mg, Ca, Ti, V, Cr, Fe, Zn, Ga, Y, Zr, Nb, Mo, Ta, and W, and $0.9 \le x2 \le 1.1$, $0.3 \le d \le 1$, $0 \le e \le 0.7$, and $d+e=1$.

6. A method of preparing the positive electrode active material of claim 1, the method comprising:

preparing a multilayer-structured precursor for a positive electrode active material in which two or more elements among nickel, cobalt, and manganese are precipitated in different regions; and
mixing the precursor for a positive electrode active material with a lithium raw material and sintering the mixture.

7. The method of claim 6, wherein the preparing of the precursor for a positive electrode active material comprises:

performing a co-precipitation reaction while adding a metal solution containing nickel and cobalt, an ammonium cationic complexing agent, and a basic compound to form nickel-cobalt hydroxide particles; and
performing a co-precipitation reaction while adding a metal solution containing nickel, cobalt, and manganese, an ammonium cationic complexing agent, and a basic compound to a reaction solution containing the nickel-cobalt hydroxide particles to form a nickel-cobalt-manganese hydroxide on the nickel-cobalt hydroxide particles.

8. The method of claim 6, wherein the preparing of the precursor for a positive electrode active material comprises:

performing a precipitation reaction while adding a metal solution containing nickel, an ammonium cationic complexing agent, and a basic compound to form nickel hydroxide particles;
performing a precipitation reaction while adding a metal solution containing manganese, an ammonium cationic complexing agent, and a basic compound to a reaction solution containing the nickel hydroxide particles to form nickel/manganese hydroxide particles in which a manganese hydroxide is precipitated on the nickel hydroxide particles; and
performing a precipitation reaction while adding a metal solution containing cobalt, an ammonium cationic complexing agent, and a basic compound to a reaction solution containing the nickel/manganese hydroxide to form nickel/manganese/cobalt hydroxide particles in which a cobalt hydroxide is precipitated on the nickel/manganese hydroxide particles.

9. A positive electrode comprising the positive electrode active material of any one of claims 1 to 5.

10. A lithium secondary battery comprising the positive electrode of claim 9.

[FIG. 1]

[FIG. 2]

## INTERNATIONAL SEARCH REPORT

| | International application No. |
|---|---|
| | **PCT/KR2022/006638** |

| A. | CLASSIFICATION OF SUBJECT MATTER |
|---|---|

**H01M 4/525**(2010.01)i; **H01M 4/505**(2010.01)i; **H01M 4/36**(2006.01)i; **H01M 10/052**(2010.01)i; **C01G 53/00**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 10/0525(2010.01); H01M 4/131(2010.01); H01M 4/485(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive active material), 코어-쉘(core-shell), 니켈(nickel, Ni), 망간 (manganese, Mn)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2016-0129764 A (LG CHEM, LTD.) 09 November 2016 (2016-11-09)<br>See claims 1, 12, 17 and 18; and paragraphs [0089], [0091], [0196], [0198], [0202] and [0216]. | 1-6,9,10 |
| Y | | 7,8 |
| Y | KR 10-2018-0104837 A (DRB HOLDING CO., LTD.) 27 September 2018 (2018-09-27)<br>See claim 1; and paragraphs [0063]-[0070]. | 7,8 |
| A | KR 10-2017-0081799 A (KOREA NATIONAL UNIVERSITY OF TRANSPORTATION INDUSTRY-ACADEMIC COOPERATION FOUNDATION) 13 July 2017 (2017-07-13)<br>See claims 1-17. | 1-10 |
| A | KR 10-2018-0077081 A (LG CHEM, LTD.) 06 July 2018 (2018-07-06)<br>See entire document. | 1-10 |

| ☑ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 August 2022** | **17 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2022/006638** |

### C. DOCUMENTS CONSIDERED TO BE RELEVANT

| Category* | Citation of document, with indication, where appropriate, of the relevant passages | Relevant to claim No. |
|---|---|---|
| A | KR 10-2016-0050063 A (HITACHI METALS, LTD.) 10 May 2016 (2016-05-10) <br> See entire document. | 1-10 |
| A | KR 10-2019-0058359 A (LG CHEM, LTD.) 29 May 2019 (2019-05-29) <br> See entire document. | 1-10 |

**INTERNATIONAL SEARCH REPORT**
Information on patent family members

| International application No. |
| --- |
| **PCT/KR2022/006638** |

| Patent document cited in search report | | | Publication date (day/month/year) | Patent family member(s) | | | Publication date (day/month/year) |
| --- | --- | --- | --- | --- | --- | --- | --- |
| KR | 10-2016-0129764 | A | 09 November 2016 | CN | 107534140 | A | 02 January 2018 |
| | | | | CN | 107534140 | B | 17 July 2020 |
| | | | | EP | 3291340 | A1 | 07 March 2018 |
| | | | | EP | 3291340 | A4 | 25 April 2018 |
| | | | | EP | 3291340 | B1 | 14 November 2018 |
| | | | | JP | 2018-515884 | A | 14 June 2018 |
| | | | | JP | 6564064 | B2 | 21 August 2019 |
| | | | | KR | 10-1918345 | B1 | 13 November 2018 |
| | | | | US | 10581110 | B2 | 03 March 2020 |
| | | | | US | 2018-0108940 | A1 | 19 April 2018 |
| | | | | WO | 2016-175597 | A1 | 03 November 2016 |
| KR | 10-2018-0104837 | A | 27 September 2018 | None | | | |
| KR | 10-2017-0081799 | A | 13 July 2017 | KR | 10-1860625 | B1 | 24 May 2018 |
| KR | 10-2018-0077081 | A | 06 July 2018 | CN | 108336326 | A | 27 July 2018 |
| | | | | CN | 108336326 | B | 08 July 2022 |
| | | | | CN | 110352518 | A | 18 October 2019 |
| | | | | JP | 2020-507894 | A | 12 March 2020 |
| | | | | JP | 2021-168306 | A | 21 October 2021 |
| | | | | JP | 6945879 | B2 | 06 October 2021 |
| | | | | KR | 10-2018-0077018 | A | 06 July 2018 |
| | | | | KR | 10-2024744 | B1 | 25 September 2019 |
| | | | | KR | 10-2117621 | B1 | 02 June 2020 |
| | | | | US | 2018-0183046 | A1 | 28 June 2018 |
| | | | | WO | 2018-143753 | A1 | 09 August 2018 |
| KR | 10-2016-0050063 | A | 10 May 2016 | JP | 6222347 | B2 | 01 November 2017 |
| | | | | KR | 10-1847003 | B1 | 10 April 2018 |
| | | | | US | 2016-0276664 | A1 | 22 September 2016 |
| | | | | WO | 2015-151606 | A1 | 08 October 2015 |
| KR | 10-2019-0058359 | A | 29 May 2019 | CN | 111295360 | A | 16 June 2020 |
| | | | | EP | 3693340 | A2 | 12 August 2020 |
| | | | | EP | 3693340 | A4 | 23 December 2020 |
| | | | | JP | 2021-501449 | A | 14 January 2021 |
| | | | | JP | 7049552 | B2 | 07 April 2022 |
| | | | | KR | 10-2313089 | B1 | 18 October 2021 |
| | | | | US | 2021-0135195 | A1 | 06 May 2021 |
| | | | | WO | 2019-103461 | A2 | 31 May 2019 |
| | | | | WO | 2019-103461 | A3 | 18 July 2019 |

Form PCT/ISA/210 (patent family annex) (July 2019)

**EP 4 300 632 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210061016